# EUROPEAN PATENT APPLICATION

(11) **EP 2 177 982 A2**
(43) Date of publication of application: **21.04.2010**
(21) Application number: 09172499.7
(22) Date of filing: 08.10.2009
(51) Int. Cl.: G06F 3/048

(54) **Display apparatus**

(30) Priority: 10.10.2008 JP 2008264434
(71) Applicant: Toshiba TEC Kabushiki Kaisha, Tokyo 141-8664 (JP)
(72) Inventor: Miyazaki, Sou, Tokyo 141-8664 (JP); Watanabe, Naoki, Tokyo 141-8664 (JP); Narahashi, Masaki, Tokyo Tokyo 141-8664 (JP); Tsujimoto, Shuichi, Tokyo 141-8664 (JP); Hirama, Mika, Tokyo 141-8664 (JP)
(74) Representative: Gendron, Vincent Christian

(57) **Abstract**

A display apparatus (1) which displays a plurality of items includes a display panel (17) provided with a function of displaying a three-dimensional image to be stereoscopically viewable, an item overview creation section (91) which creates information on an item overview screen on which two-dimensional images of the respective items are arranged, an overview display control section (92) which displays the item overview screen on the display panel, and a specific item display control section (93) which switches an image of a specific item selected from among the items two-dimensional images of which are displayed on the item overview screen from the two-dimensional image to a three-dimensional image.

## Description

The present invention relates to a display apparatus used as an electronic menu apparatus or the like.

There is a display apparatus intended for restaurants, a so-called electronic menu apparatus configured to display item names of a menu and two-dimensional images of the items in a one-to-one correspondence with each other as a list. Jpn. Pat. Appln. KOKAI Publication No. 2001-175954 discloses an electronic menu apparatus configured to, when a customer stratum is specified, enlarge images of items enjoying high popularity in the customer stratum larger than the other items in such a manner that the images are more conspicuous than the other items.

However, the display apparatus is limited in the size of the screen. As a result of this, when a specific item is made more conspicuous than the other items by changing the size of the image, the number of items which can be displayed on one screen is reduced.

As another method of making a specific item more conspicuous than the other items without changing the size of the image, there is a method in which the color of the image is changed. It is certain that when the color of a specific item in a group of images in which the images are similar in color and shape is changed, the specific image can be made more conspicuous than the other images. However, regarding an electronic menu apparatus taking a group of images diverse in color and shape as a subject thereof, it is difficult to make one item distinguished from the other items by only changing the color of the image.

The present invention has been contrived on the basis of these circumstances, and an object thereof is to provide a display apparatus capable of making a specific item more conspicuous than the other items without changing the size or color of the image.

According to embodiments of the present invention, a display apparatus which displays a plurality of items includes a display panel provided with a function of displaying a three-dimensional image to be stereoscopically viewable, an item overview creation section which creates information on an item overview screen on which two-dimensional images of the respective items are arranged, an overview display control section which displays the item overview screen on the display panel, and a specific item display control section which switches an image of a specific item selected from among the items two-dimensional images of which are displayed on the item overview screen from the two-dimensional image to a three-dimensional image.

The invention can be more fully understood from the following detailed description when taken in conjunction with the accompanying drawings, in which:
FIG. 1 is an overall configuration view of an electronic menu system which is an embodiment of the present invention.
FIG. 2 is a data format of a record to be stored in a category database managed by a database server of the electronic menu system.
FIG. 3 is a data format of a record to be stored in an item database managed by the database server.
FIG. 4 is a data format of a record to be stored in an image database managed by the database server.
FIG. 5 is a data format of a record to be stored in a screen database managed by the database server.
FIG. 6 is a block diagram showing the configuration of an electronic menu terminal of the electronic menu system.
FIG. 7 is a schematic view showing an example of attachment of a display panel provided to the electronic menu terminal to a restaurant table.
FIG. 8 is a schematic view showing the transition of main screens displayed on the display panel.
FIG. 9 is one layout example of a category screen displayed on the display panel.
FIG. 10 is one layout example of an item overview screen displayed on the display panel.
FIG. 11 is one layout example of an item detail screen displayed on the display panel.
FIG. 12 is one layout example of an order confirmation screen displayed on the display panel.
FIG. 13 is one layout example of an order completion screen displayed on the display panel.
FIG. 14 is a flowchart showing a main information processing procedure to be executed by a CPU of the electronic menu terminal.
FIG. 15 is a flowchart specifically showing the procedure of the category selection processing in FIG. 14.
FIG. 16 is a flowchart specifically showing the procedure of the item image selection processing in FIG. 15.
FIG. 17 is a flowchart specifically showing the procedure of the detail screen display processing in FIG. 16.
FIG. 18 is a flowchart specifically showing the processing procedure of the order confirmation screen display processing in FIG. 16 or 17.

This embodiment is of a case where the present invention is applied to an electronic menu terminal of an electronic menu system constructed in a restaurant.

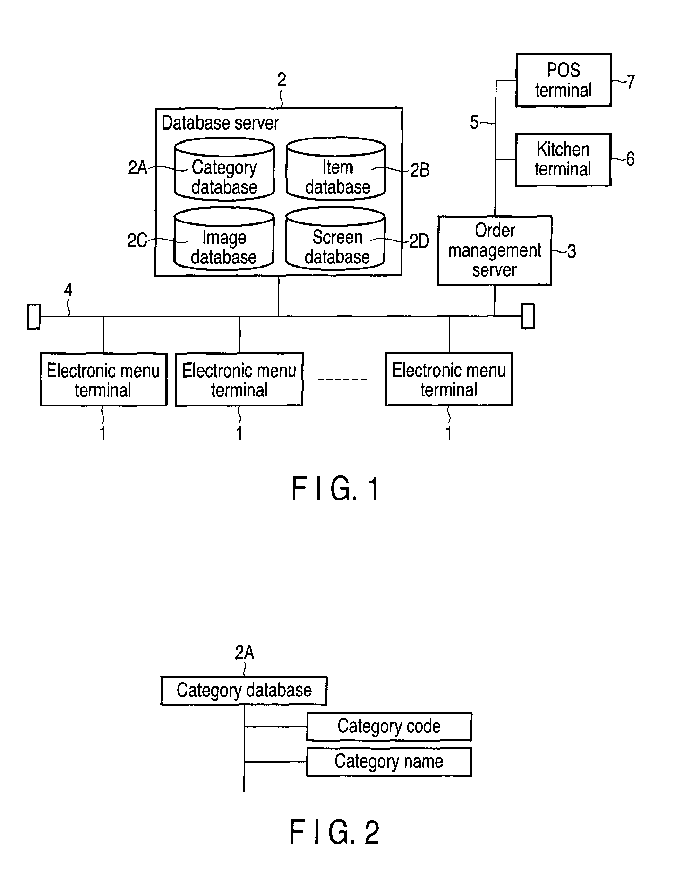

FIG. 1 is an overall configuration view of the electronic menu system. The electronic menu system is constituted of a plurality of electronic menu terminals 1, a database server 2, and order management server 3. Each of the electronic menu terminals 1 is connected to the database server 2 and order management server 3 through a local area network (LAN) 4.

The order management server 3 is a computer apparatus specialized in management of ordered data of customers. The order management server 3 connects a kitchen terminal 6 and point-of-sales (POS) terminal 7 to each other through a dedicated line. The kitchen terminal 6 creates data of cooking instruction to the kitchen on the basis of order data items of the customers, and displays the instruction data or produces printed output thereof. The POS terminal 7 calculates the price from the order data of a customer requesting the bill, and processes the payment data for the price to issue a receipt.

It should be noted that the line connecting the order management server 3, kitchen terminal 6, and POS terminal 7 to each other is not limited to the dedicated line 5. For example, the kitchen terminal 6 and POS terminal 7 may be connected to the LAN 4, and may transmit/receive data to/from the order management server 3 through the LAN 4.

The database server 2 is a computer apparatus specialized in management of various databases such as a category database 2A, item database 2B, image database 2C, screen database 2D, and the like.

The category database 2A stores therein information on categories into which respective items of the menu are classified. FIG. 2 is a data format of a record to be stored in the category database 2A. The category database 2A stores therein records each including a category code and category name, the records being of a number corresponding to the number of categories. The category name is a name expressing a category such as hamburgers, pasta, curry, drink, dessert or the like. The category code is a proper code assigned to each category to recognize each category.

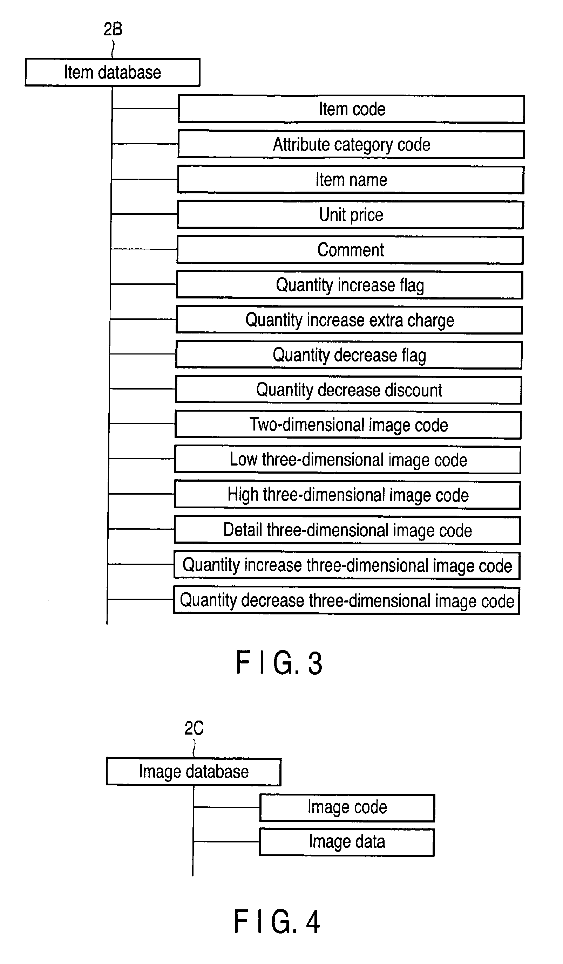

The item database 2B stores therein information on each item of the menu. FIG. 3 is a data format of a record to be stored in the item database 2B. The item database 2B stores therein records each including an item code, attribute category code, item name, unit price, comment, quantity increase flag, quantity increase extra charge, quantity decrease flag, quantity decrease discount, two-dimensional image code, low three-dimensional image code, high three-dimensional image code, detail three-dimensional image code, quantity increase three-dimensional image code, and quantity decrease three-dimensional image code, the records being of a number corresponding to the number of items. The item database 2B constitutes an item information storage section.

The item code is a proper code assigned to each item to recognize each item of the menu. The attribute category code is a category code of a category to which an item belongs. The comment is text data used to explain the contents of the item. The quantity increase flag is data declaring whether or not the quantity of the item can be increased. The quantity increase extra charge is an amount to be added to the unit price when the quantity of the item is increased. The quantity decrease flag is data declaring whether or not the quantity of the item can be decreased. The quantity decrease discount is an amount to be subtracted from the unit price when the quantity of the item is decreased.

The two-dimensional image code is a code used to recognize the two-dimensional image data of the item. The low three-dimensional image code is a code used to recognize the low three-dimensional image data of the item. The high three-dimensional image code is a code used to recognize the high three-dimensional image data of the item. The detail three-dimensional image code is a code used to recognize the detail three-dimensional image data of the item. The quantity increase three-dimensional image code is a code used to recognize the quantity increase three-dimensional image data of the item. The quantity decrease three-dimensional image code is a code used to recognize the quantity decrease three-dimensional image data of the item.

Data of a three-dimensional image includes parallax information of the right and left. By adjusting the parallax information, it is possible to increase/decrease the degree of exaggeration in height when an image is stereoscopically viewed. In the high three-dimensional image data, the degree of exaggeration in height is set larger than in the low three-dimensional image data. Data of the detail three-dimensional image is data obtained by enlarging the high three-dimensional image data by a given number. Data of the quantity increase three-dimensional image corresponds to that of the detail three-dimensional image obtained when the quantity of the item is increased. Data of the quantity decrease three-dimensional image corresponds to that of the detail three-dimensional image obtained when the quantity of the item is decreased.

The image database 2C stores therein various image data. FIG. 4 is a data format of a record to be stored in the image database 2C. The image database 2C stores therein records each including an image code and image data, the records being of a number corresponding to the number of image data items. The image data includes two-dimensional image data, low three-dimensional image data, high three-dimensional image data, detail three-dimensional image data, quantity increase three-dimensional image data, quantity decrease three-dimensional image data, and the like. The image code is a proper code assigned to the image data in order to recognize the corresponding image data.

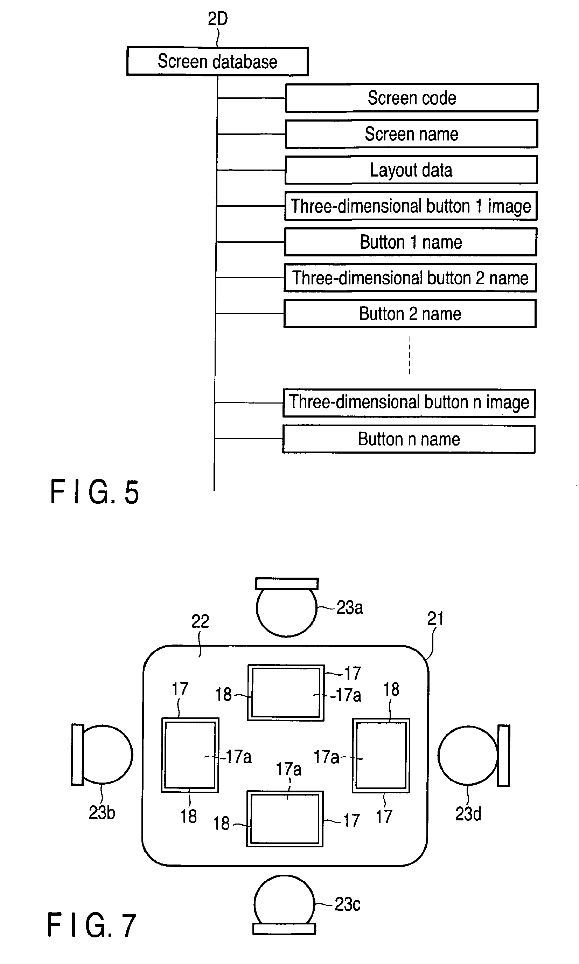

The screen database 2D stores therein various screen data. FIG. 5 is a data format of a record to be stored in the screen database 2D. The screen database 2D stores therein records each including a screen code, screen name, layout data, three-dimensional button image, and button name thereof, the records being of a number corresponding to the number of screen data items. The three-dimensional button image and button name form a pair, and a plurality of pairs are stored.

The screen code is a proper code assigned to each screen to recognize various screens displayed on a display panel of the electronic menu terminal 1. The screen name is a name set for the screen. The layout data is data indicating arrangement positions, sizes, colors, and the like of parts constituting the screen. The three-dimensional button image is image data of a stereoscopically viewable button part. The button name is a name to be displayed in the three-dimensional button image, the button name and three-dimensional button image forming a pair.

Next, the electronic menu terminal 1 will be described below. The electronic menu terminal 1 functions as a display apparatus configured to electronically display an item overview of a menu to be served to customers in a restaurant.

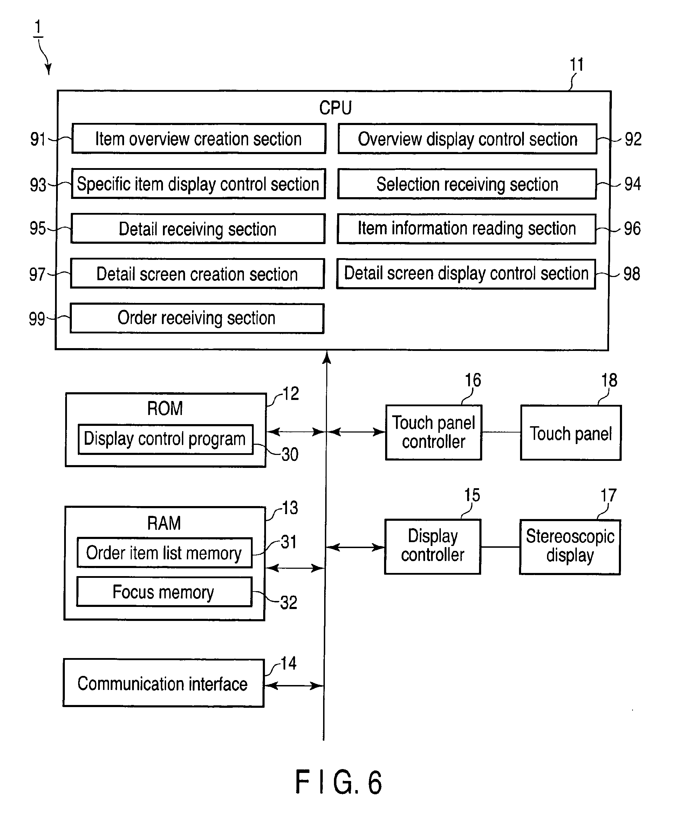

FIG. 6 is a block diagram of the electronic menu terminal 1. The electronic menu terminal 1 is a computer apparatus provided with a central processing unit (CPU) 11, read-only memory (ROM) 12, random access memory (RAM) 13, communication interface 14, display controller 15, and touch panel controller 16.

A LAN 4 is connected to the communication interface 14. The electronic menu terminal 1 can access the database server 2 through the communication interface 14, and acquire data of the databases 2A, 2B, 2C, and 2D. Further, the electronic menu terminal 1 can access the order management server 3 through the communication interface 14, and transmit the order data of the customer. The communication interface 14 constitutes a communication section.

The display controller 15 connects a stereoscopic display 17 thereto. The touch panel controller 16 connects a touch panel 18 thereto. The touch panel 18 is provided to be superposed on the stereoscopic display 17.

The stereoscopic display 17 is a display panel provided with a function of displaying a three-dimensional image to be stereoscopically viewable. In this embodiment, the naked-eye stereoscopic display not requiring special glasses is used. The naked-eye stereoscopic display includes a binocular display system (head tracking system, scanner backlight system, etc.) and multi-view display system (step barrier system, diagonal lenticular image system, etc.). In the present invention, the display system is not particularly limited. The stereoscopic display requiring glasses may also be used. However, in view of the use as the electronic menu terminal for a restaurant, the naked-eye stereoscopic display is preferable.

The stereoscopic display 17 is built into a top plate 22 of a restaurant table 21 as shown in FIG. 7. Further, the touch panel 18 is arranged on top of a screen 17a of the stereoscopic display 17. At this time, the screen 17a on which the touch panel 18 is arranged becomes substantially flush with the top surface of the top plate 22.

FIG. 7 is an example of attachment of the stereoscopic display 17 to the restaurant table 21 for which one customer seat 23a, 23b, 23c, and 23d is prepared at each side of the substantially rectangular top plate 22. As shown in FIG. 7, each stereoscopic display 17 is attached to a front part of each of the seats 23a to 23d.

The customer seated at the restaurant table 21 browses the images displayed on the stereoscopic display 17 in front of himself or herself, and appropriately touches the screen, whereby he or she can confirm the items to be served by the restaurant, and order the desired item.

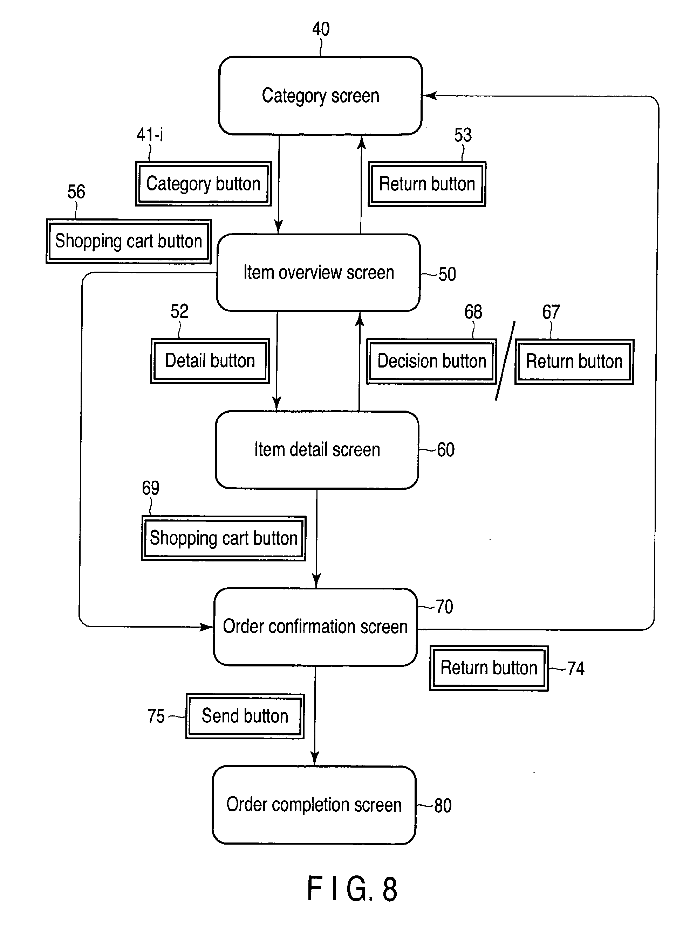

FIG. 8 is a transition view of screens displayed on the stereoscopic display 17. The screens include a category screen 40, item overview screen 50, item detail screen 60, order confirmation screen 70, and order completion screen 80.

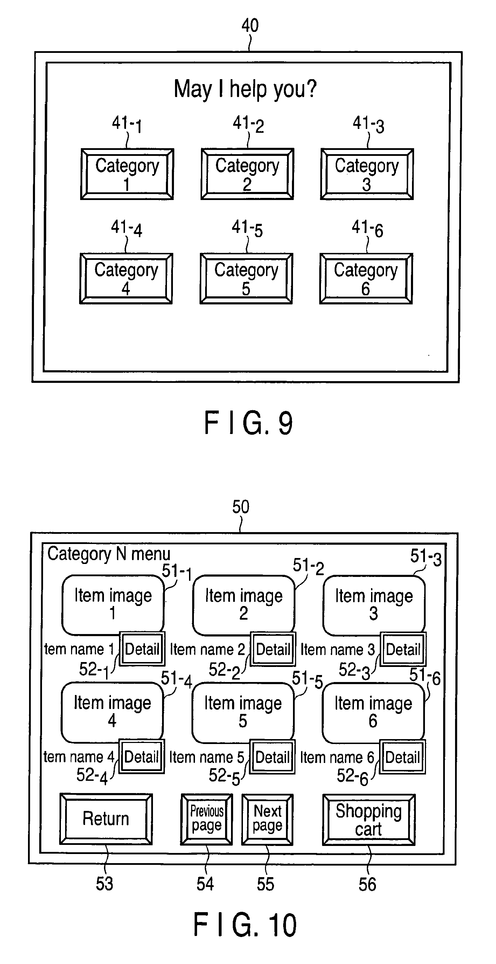

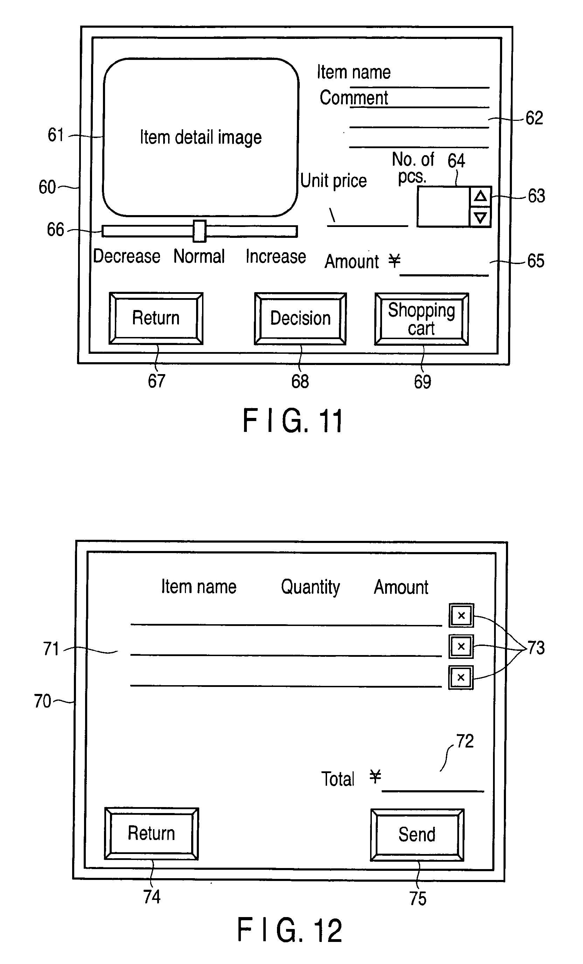

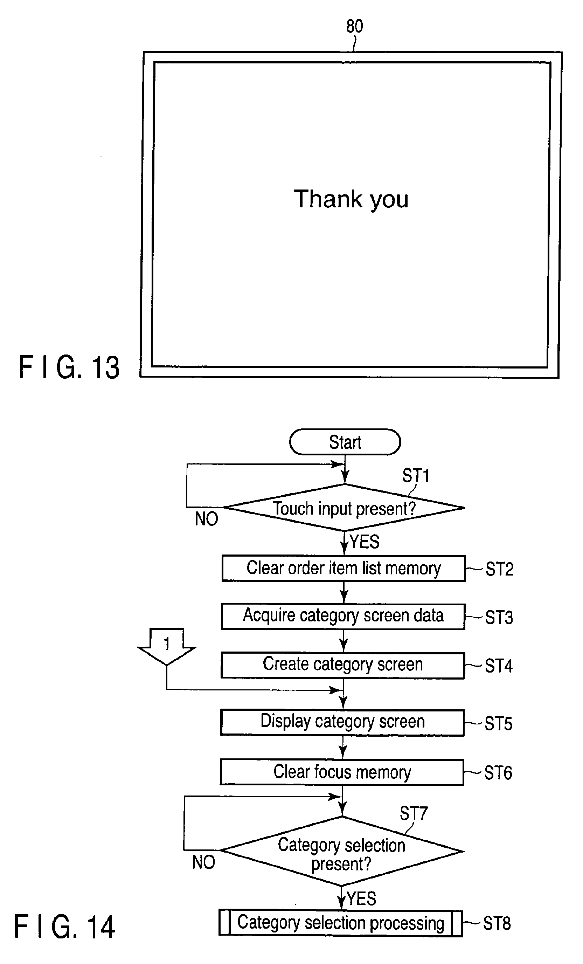

FIG. 9 is one layout example of the category screen 40. FIG. 10 is one layout example of the item overview screen 50. FIG. 11 is one layout example of the item detail screen 60. FIG. 12 is one layout example of the order confirmation screen 70. FIG. 13 is one layout example of the order completion screen 80.

A CPU 11 controls the display processing of the respective screens 40 to 80 in accordance with a display control program 30 stored in a ROM 12. In order to realize this control, the CPU 11 includes functions of an item overview creation section 91, overview display control section 92, specific item display control section 93, selection receiving section 94, detail receiving section 95, item information reading section 96, detail screen creation section 97, detail screen display control section 98, and order receiving section 99. The respective functions will be specifically described below in accordance with the flowcharts of FIGS. 14 to 18.

The operation procedure from the time when a customer confirms the item to the time when the customer completes the order, and the processing procedure of the CPU 11 for the operation of the customer will be described below by using the flowcharts of FIGS. 14 to 18.

When the display control program 30 is started, the CPU 11 of the electronic menu terminal 1 in the idle state waits for a signal from the touch panel 18 as shown in step ST1 of FIG. 14.

A customer seated in the seat of the restaurant table 21 touches the screen of the stereoscopic display 17 arranged in front of the customer's seat before starting the order. When the screen is touched, a signal from the touch panel 18 is input to the touch panel controller 16. Upon detection of the signal from the touch panel 18, the CPU 11 clears the order item list memory 31 (ST2). The order item list memory 31 is formed in the RAM 13.

Subsequently, the CPU 11 captures a record of the category screen 40 from the screen database 2D (ST3). Further, on the basis of various setting information items of the record, the CPU 11 creates the category screen 40 (ST4), and displays the screen 40 on the stereoscopic display 17 (ST5). At this time, the CPU 11 clears the focus memory 32 (ST6). The focus memory 32 is formed in the RAM 13.

The category screen 40 is a screen used to introduce categories into which respective items of the menu are classified to the customer, and receive selection of any one of the categories. As shown in FIG. 9, on the category screen 40, a plurality of (six in FIG. 9) category buttons 41 (41-1, 41-2, 41-3, 41-4, 41-5, and 41-6) prepared for each of the categories are displayed in the form of stereoscopically viewable three-dimensional buttons.

Having browsed the category screen 40, the customer touches any one category button 41-i (1 ≤ I ≤ 6) on which the desired category name is displayed to select the category.

The CPU 11 waits for a category to be selected (ST7). When any one category button 41-i is touched, a signal is input from the touch panel 18 to the touch panel controller 16. Upon detection of the signal from the touch panel 18, the CPU 11 determines, on the basis of the signal, which category button 41-i has been touched, i.e., which category has been selected.

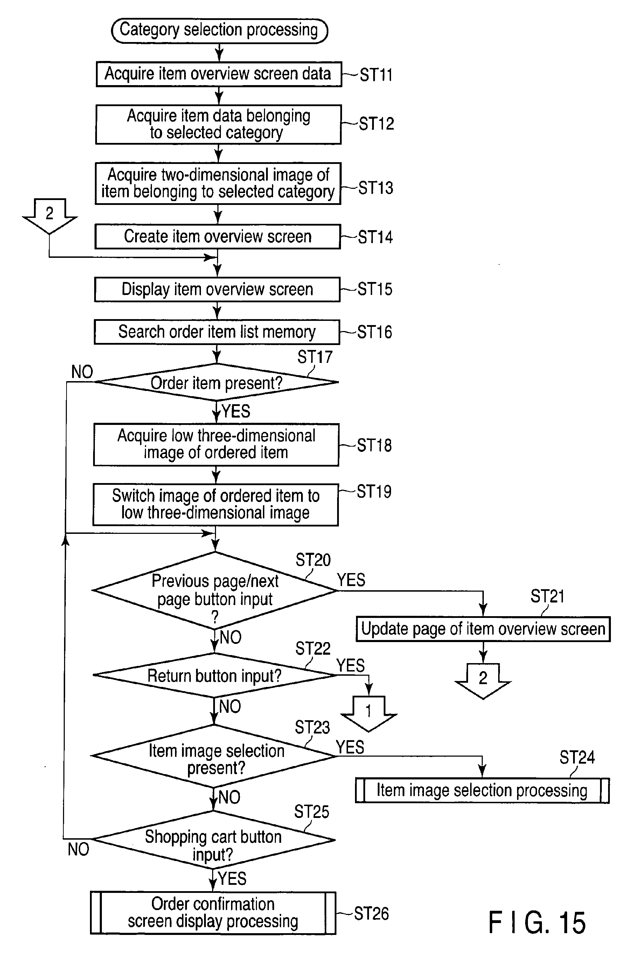

When the category is selected (YES in ST7), the CPU 11 starts the category selection processing specifically shown by the flowchart of FIG. 15 (ST8).

First, the CPU 11 captures the record of the item overview screen 50 from the screen database 2D (ST11). Further, the CPU 11 captures records of all the items belonging to the selected category from the item database 2B (ST12).

Then, the CPU 11 extracts the two-dimensional image code from the record of each item. Further, the CPU 11 captures all the records in each of which two-dimensional image data specified by the extracted two-dimensional image code is set from the image database 2C (ST13).

The CPU 11 creates the item overview screen 50 on the basis of various data of the records acquired in the processing of ST11 to ST13 (ST14: item overview creation section 91), and displays the screen 50 on the stereoscopic display 17 (ST15: overview display control section 92).

The item overview screen 50 is a screen used to introduce the items belonging to the selected category to the customer, and receive an order of any one item. As shown in FIG. 10, on the item overview screen 50, a plurality of (six in FIG. 10) item image display columns 51 (51-1, 51-2, 51-3, 51-4, 51-5, and 51-6) are formed. Further, detail buttons 52 (52-1, 52-2, 52-3, 52-4, 52-5, and 52-6) are displayed to correspond to the respective item image display columns 51. Further, a return button 53, previous page button 54, next page button 55, and shopping cart button 56 are displayed in the form of stereoscopically viewable three-dimensional buttons. These screen configuration elements 51 to 56 are included in the record of the item overview screen 50. It should be noted that the operation of each of the detail buttons 52 is made invalid at the present time.

In the respective item image display columns 51, two-dimensional images of the items belonging to the selected category are displayed. Further, the names of the items are also displayed on the lower side of the images. The two-dimensional image is formed of the two-dimensional image data of the record captured from the image database 2C. The name of the item is recorded in the record captured from the item database 2B.

It should be noted that when the number of items belonging to the selected category exceeds the number of item image display columns 51, the item overview screen 50 is formed into a plurality of separate pages. Further, first, the first page is displayed.

After displaying the item overview screen 50, the CPU 11 searches the order item list memory 31 (ST16). The order item list memory 31 is a memory area functioning as the order information storage section. In the order item list memory 31, data of the item already ordered by the customer is registered. Accordingly, at the stage at which the customer has not ordered even one item, data is not stored in the order item list memory 31.

The CPU 11 searches the order item list memory 31 for the data of the ordered item to determine whether or not the data of the ordered item is registered therein (ST17). When the data is not registered therein (NO in ST17), the CPU 11 does not execute ST18 and ST19.

When the data of the ordered item is registered in the order item list memory 31 (YES in ST17), the CPU 11 extracts the low three-dimensional image code from the data. Further, the CPU 11 captures three-dimensional image data specified by the extracted low three-dimensional image code from the image database 2C (ST18).

Having captured the three-dimensional image data, the CPU 11 switches the image of the ordered item on the item overview screen 50 to the low three-dimensional image created by using the three-dimensional image data (ST19: specific item display control section 93).

The CPU 11 executes the processing of ST18 and ST19 with respect to data of all the ordered items stored in the order item list memory 31.

As a result of this, in the respective item image display columns 51 of the item overview screen 50, two-dimensional images are displayed for the items not yet ordered by the customer, and a low three-dimensional image with a low degree of exaggeration in height is displayed for the ordered item. Accordingly, the customer can understand that an item an image of which is not stereoscopically viewable is an item not ordered yet, and an item an image of which is stereoscopically viewable is an item already ordered.

When although the item overview screen 50 has been browsed, no item which the customer wants to order is found, the customer touches the previous page button 54, next page button 55 or return button 53.

When the previous page button 54 or next page button 55 is touched (YES in ST20), the CPU 11 switches the page of the item overview screen (ST21). Further, the CPU 11 displays the item overview screen 50 the page of which has been switched on the stereoscopic display 17 (ST15). That is, when the previous page button 54 is touched, the item overview screen 50 is switched to the page preceding by one page, and when the next page button 55 is touched, the screen 50 is switched to the page succeeding by one page. It should be noted that when the current page is the first page, the previous page button 54 does not function. Likewise, when the current page is the last page, the next page button 55 does not function.

When the return button 53 is touched (YES in ST22), the CPU 11 returns the screen of the stereoscopic display 17 to the category screen 40 (ST5).

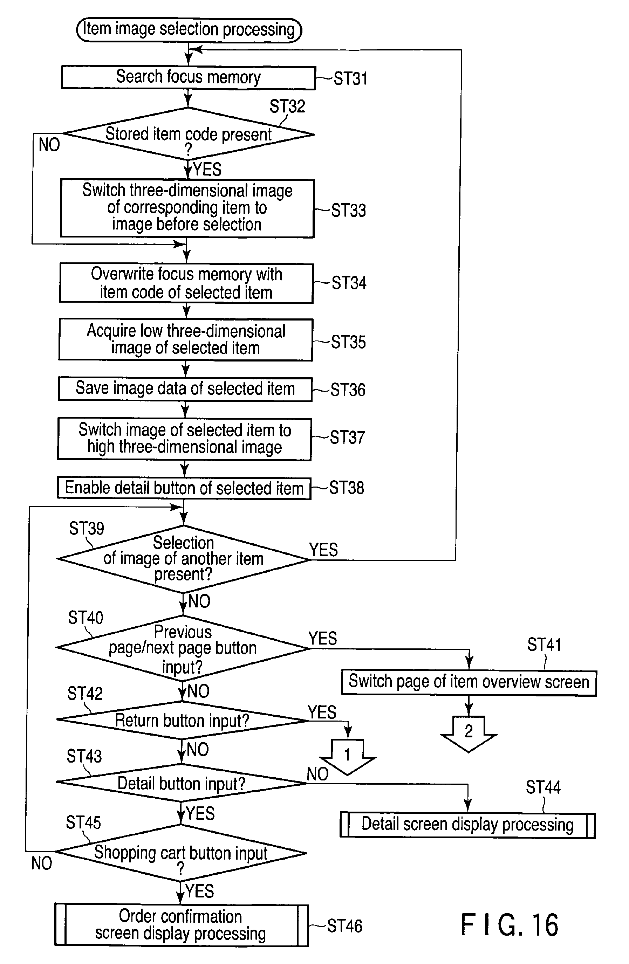

When an item which the customer wants to order is found, the customer touches the item image display column 51-j (1 ≤ j ≤ 6) of the item. When any one item image display column 51-j is touched (YES in ST23), the CPU 11 determines which item image display column 51-j has been touched, i.e., which item has been selected. Further, the CPU 11 executes the item image selection processing specifically shown by the flowchart of FIG. 16 (ST24: selection receiving section 94).

First, the CPU 11 searches the focus memory 32 (ST31). At the beginning, no data is stored in the focus memory 32. Having confirmed that no data is stored in the focus memory 32 (NO in ST32), the CPU 11 extracts the item code from the item data record of the selected item. Further, the CPU 11 overwrites the focus memory 32 with the item code to save the item code (ST34).

Subsequently, the CPU 11 extracts the high three-dimensional image code from the item data record of the selected item. Further, the CPU 11 captures a record in which three-dimensional image data specified by the extracted high three-dimensional image code is set from the image database 2C (ST35).

Subsequently, the CPU 11 saves the image data of the selected item displayed in the item image display column 51 to the temporary buffer (ST36). Thereafter, the CPU 11 switches the image in the item image display column 51 to the high three-dimensional image created by using the three-dimensional image data captured from the image database 2C (ST37: specific item display control section 93). Further, the CPU 11 enables the detail button 52 corresponding to the item image display column 51 (ST38).

As described above, when the customer touches any one item image display column 51-j, the image of the item displayed in the display column 51-j is switched to a high three-dimensional image with a high degree of exaggeration in height. Accordingly, the customer can understand that the selection of the item specified by the image has been accepted from the fact that the touched image has changed to the high three-dimensional image.

When the item displayed by the high three-dimensional image is not ordered, the customer touches an item image display column 51-j of another item. Alternatively, the customer touches the previous page button 54, next page button 55 or return button.

When the item image display column 51-j of another item is touched (YES in ST39), the CPU 11 searches the focus memory 32 again (ST31). This time, an item code has been stored in the focus memory 32 by the processing of ST34.

Having confirmed that data is stored in the focus memory 32 (YES in ST32), the CPU 11 reads the image data saved to the temporary buffer in the processing of ST36. Further, the CPU 11 displays an image (two-dimensional image or low three-dimensional image) corresponding to the image data in the item image display column 51-j touched at the last minute (ST33). Thereafter, the CPU 11 executes the processing in and after ST34 again.

As described above, when the customer touches another item image display column 51-j, the image of the item image display column 51-j changes to the high three-dimensional image. On the other hand, the high three-dimensional image of the item image display column 51-j touched at the last minute returns to the two-dimensional image or low three-dimensional image at the time before the display column 51-j is touched.

When the previous page button 54 or next page button 55 is touched (YES in ST40), the CPU 11 switches the page of the item overview screen 50 (ST41). Further, the CPU 11 displays the item overview screen 50 the page of which has been switched on the stereoscopic display 17 (ST15).

When the return button 53 is touched (YES in ST42), the CPU 11 returns the screen of the stereoscopic display 17 to the category screen 40 (ST5).

When the item displayed in the high three-dimensional image is to be ordered, the customer touches a detail button 52 corresponding to the item image display column 51 in which the image is displayed.

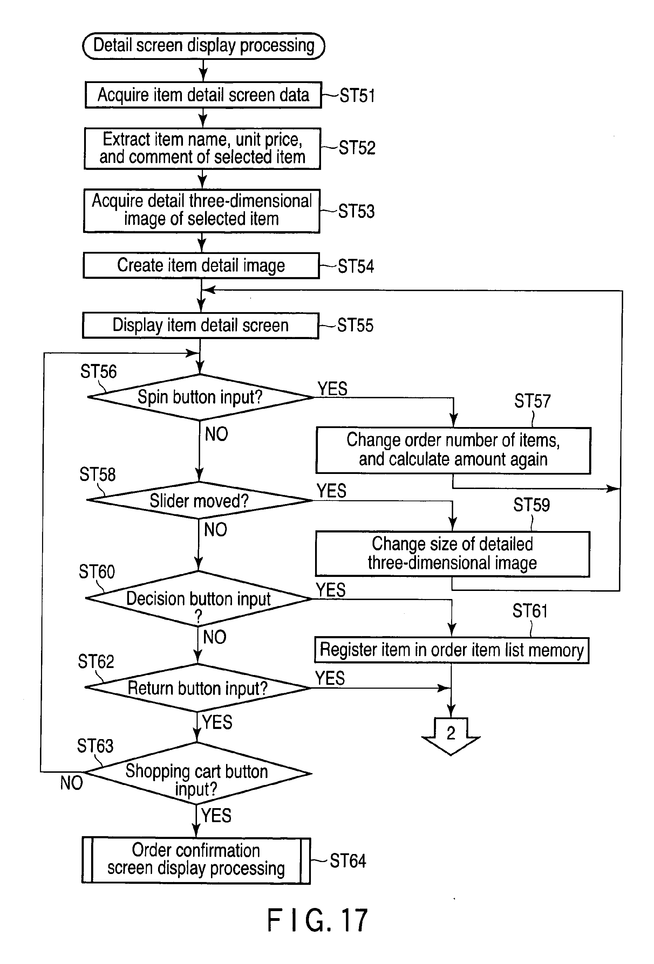

When the detail button 52 is touched (YES in ST43: Detail receiving section 95), the CPU 11 executes the detail screen display processing specifically shown in the flowchart of FIG. 17 (ST44).

First, the CPU 11 captures the record of the item detail screen 60 from the screen database 2D (ST51). Then, the CPU 11 captures the record of the selected item from the item database 2B. The selected item is the item an image of which is displayed in the item image display column 51 corresponding to the touch-operated detail button 52.

The CPU 11 extracts the respective data items of the item name, unit price, and comment from the record of the selected item (ST52: item information reading section 96). Further, the CPU 11 extracts the detail three-dimensional image code from the record of the selected item. Further, the CPU 11 captures a record in which three-dimensional image data specified by the extracted detail three-dimensional image code is set (ST53).

The CPU 11 creates the item detail screen 60 on the basis of various data items of the records acquired in the processing of ST51 to ST53 (ST54: detail screen creation section 97), and displays the screen 60 on the stereoscopic display 17 (ST55: detail screen display control section 98).

The item detail screen 60 is a screen used to introduce the detail information on the selected item to the customer, and receive an order. As shown in FIG. 11, on the item detail screen 60, the item detail image display column 61 is formed. Further, display columns 62 of the item, comment, and unit price, edit field 64 with up-and-down spin buttons 63, amount display column 65, slider 66, return button 67, decision button 68, and shopping cart button 69 are displayed thereon. The return button 67, decision button 68, and shopping cart button 69 are displayed in the form of stereoscopically viewable three-dimensional buttons. These screen configuration elements 61 to 69 are included in the record of the item detail screen 60.

In the item detail image display column 61, a detail three-dimensional image of the selected item is displayed. The detail three-dimensional image is formed of the detail three-dimensional image data of the record captured from the image database 2C. In the display columns of the item name, comment, and unit price, the item name, comment, and unit price read from the record of the selected item are displayed. In the edit field 64, the default value "1" of the order quantity is displayed. In the amount display column 65, an amount obtained by multiplying the unit price of the selected item by the order quantity is displayed.

When the item detail screen 60 is browsed, and the number of the ordered items is to be changed, the customer touches the spin button 63. When the spin button 63 is touched (YES in ST56), the CPU 11 increases or decreases the order quantity in the edit field 64 by "1" at a time. Further, the CPU 11 calculates the amount again, and updates the value in the amount display column 65 (ST57).

When the quantity of the ordered item is to be increased or decreased, the customer slides the slider 66 to the right or left facing toward the screen. When the slider 66 is slid (YES in ST58), the CPU 11 changes the size of the three-dimensional image displayed in the item detail image display column 61 (ST59).

More specifically, when the slider 66 is slid to the right side facing the screen, an instruction to increase the quantity is issued. In this case, the CPU 11 checks the quantity increase flag recorded in the record of the selected item. When it is determined, as a result of this, that the quantity can be increased, the CPU 11 extracts the quantity increase extra charge and quantity increase three-dimensional image code from the record of the selected item. Further, the CPU 11 captures a record in which quantity increase three-dimensional image data specified by the extracted quantity increase three-dimensional image code is set from the image database 2C, and displays the three-dimensional image created by using the quantity increase three-dimensional image data in the item detail image display column 61. Further, the CPU 11 adds the quantity increase extra charge to the unit price to calculate the amount in the amount display column 65 again.

When the slider 66 is slid to the left side facing the screen, an instruction to decrease the quantity is issued. In this case, the CPU 11 checks the quantity decrease flag recorded in the record of the selected item. When it is determined, as a result of this, that the quantity can be decreased, the CPU 11 extracts the quantity decrease discount and quantity decrease three-dimensional image code from the record of the selected item. Further, the CPU 11 captures a record in which quantity decrease three-dimensional image data specified by the extracted quantity decrease three-dimensional image code is set from the image database 2C, and displays the three-dimensional image created by using the quantity decrease three-dimensional image data in the item detail image display column 61. Further, the CPU 11 subtracts the quantity decrease discount from the unit price to calculate the amount in the amount display column 65 again.

It should be noted that when, as a result of checking the quantity increase flag or quantity decrease flag, the quantity cannot be increased or decreased, the size of the three-dimensional image is not changed.

When the selected item is to be ordered, the customer touches the decision button 68. When the decision button 68 is touched (YES in ST60), the CPU 11 registers the record of the selected item in the order item list memory 31 as the data of the ordered item.
At this time, the order quantity and amount are also registered. Furthermore, when an instruction to increase or decrease the quantity is issued, information (flag) indicating that an instruction to increase or decrease the quantity has been issued is also registered (ST61: order receiving section 99). Thereafter, the CPU 11 returns the screen of the stereoscopic display 17 to the item overview screen 50 (ST15).

When the order of the selected item is to be canceled, the customer touches the return button 67. When the return button 67 is touched (ST62), the CPU 11 returns the screen of the stereoscopic display 17 to the item overview screen 50 without registering the data of the ordered item (ST15).

As described above, the customer who has found an item which the customer wants to order touches the item image display column 51 in which the two-dimensional image of the item is displayed. Then, the detail button 52 corresponding to the item image display column 51 is enabled, and thus the customer touches the detail button 52. Then, the detail screen 60 of the selected item is displayed on the stereoscopic display 17, and thus the customer confirms the contents thereof. Further, when the selected item is to be ordered, the customer touches the decision button 68. Then, the order data of the selected item is registered in the order item list memory 31. Further, the screen of the stereoscopic display 17 returns to the item overview screen 50.

At this time, in the item image display column 51 of the item overview screen 50, an image of the ordered item is displayed as a low three-dimensional image with a low degree of exaggeration in height. On the other hand, images of items not ordered yet are still two-dimensional images. Accordingly, the customer can distinguish between items which have been ordered already and items which have not been ordered yet by only glancing at the screen.

Further, when the item image display column 51 of the item overview screen 50 is touched, the image of the item displayed in the display column 51 is displayed as a high three-dimensional image with a high degree of exaggeration in height. Accordingly, the customer can easily distinguish between items in the selection state and already ordered items from the difference between stereoscopically viewable images in height.

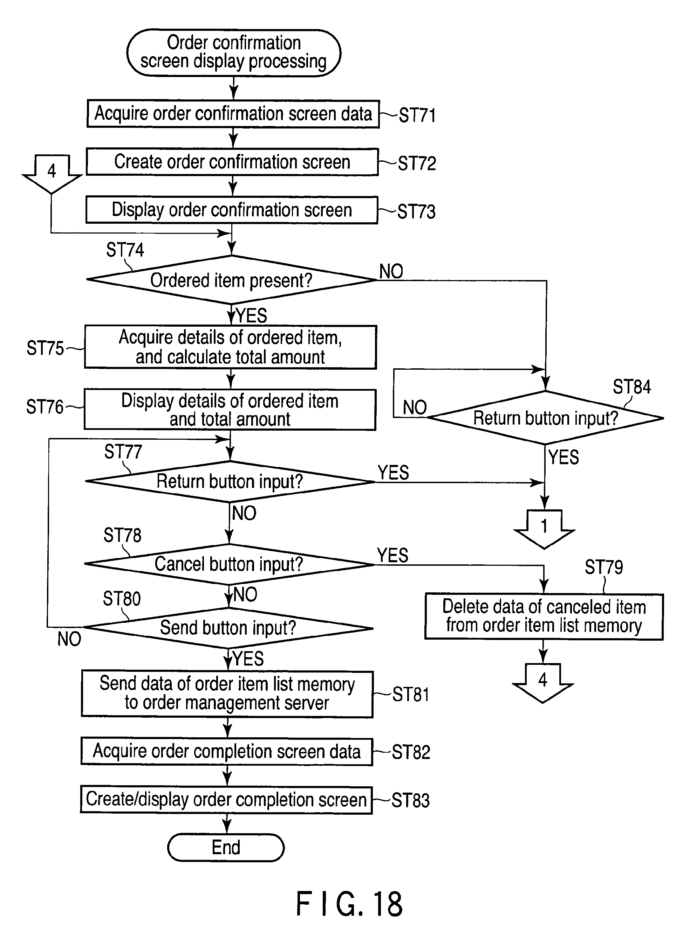

Now, the customer who has completed ordering touches the shopping cart button 56 on the item overview screen 50. Alternatively, the customer touches the shopping cart button 69 on the item detail screen 60. When the shopping cart button 56 or shopping cart button 69 is touched (YES in ST25, YES in ST45 or YES in ST63), the CPU 11 starts the order confirmation screen display processing specifically shown in the flowchart of FIG. 18 (ST26 or ST64).

First, the CPU 11 captures the record of the order confirmation screen 70 from the screen database 2D (ST71). Further, the CPU 11 creates the order confirmation screen 70 on the basis of the data of the record (ST72), and displays the screen 70 on the stereoscopic display 17 (ST73).

The order confirmation screen 70 is a screen used to make the customer confirm the ordered contents. As shown in FIG. 12, on the order confirmation screen 70, the item name of the ordered item, details display column 71 constituted of the quantity and amount, and total amount display column 72 are formed. In the details display column 71, a cancel button 73 is formed for each details row. Further, a return button 74 and send button 75 are displayed as stereoscopically viewable three-dimensional buttons.

The CPU 11 searches the order item list memory 31 for the data of the ordered item to determine whether or not the data of the ordered item is registered therein (ST74). When the data is registered therein (YES in ST74), the CPU 11 acquires the name, order quantity, and amount of the ordered item from the registered data, and calculates the total amount (ST75). Further, the CPU 11 displays the name, order quantity, and amount of the ordered item in the details display column 71 of the order confirmation screen 70. Further, the CPU 11 displays the total amount in the total amount display column 72 (ST76).

The CPU 11 waits for any one of the cancel button 73, return button 74, and send button 75 to be input.

When the order confirmation screen 70 is browsed, and ordering is to be continued, the customer touches the return button 74. When the return button 74 is touched (YES in ST77), the CPU 11 returns the screen of the stereoscopic display 17 to the category screen 40 (ST5).

When the order is to be canceled, the customer touches a cancel button 73 corresponding to the row in which the details of the item to be canceled is displayed in the details display column 71. When the cancel button 73 is touched (YES in ST78), the CPU 11 deletes the registered data of the item for which a delete instruction has been issued from the order item list memory 31 (ST79). Thereafter, the CPU 11 returns to the processing of ST74.

When the order is to be determined, the customer touches the send button 75. When the send button 75 is touched (YES in ST80), the CPU 11 transmits the data of the ordered item registered in the order item list memory 31 to the order management server 3 (ST81).

Subsequently, the CPU 11 captures the record of the order completion screen 80 from the screen database 2D (ST82). Further, the CPU 11 creates the order completion screen 80 on the basis of the data of the record, and displays the screen 80 on the stereoscopic display 17 (ST83).

By the procedure described above, the order of one customer is completed. Thereafter, the CPU 11 returns to the idle state.

It should be noted that when, as a result of searching the order item list memory 31 for the data of the ordered item, the data of the ordered item is not registered in the memory 31 (NO in ST74), the CPU 11 waits for the return button 74 to be input (ST84).
When the return button 74 is touched (YES in ST84), the CPU 11 returns the screen of the stereoscopic display 17 to the category screen 40 (ST5).

As described above, in the electronic menu terminal 1 of this embodiment, it is possible to definitely distinguish between the selected items and unselected items without changing the size and color of the images of the items displayed in the respective item image display column 51 of the item overview screen 50. Further, it is also possible, in the electronic menu terminal 1, to definitely distinguish between the ordered items and items not ordered yet, and between the selected items and ordered items.

Further, it is possible, in the electronic menu terminal 1, to confirm the detailed information on an item before ordering the item. At this time, as for the image of the item, a three-dimensional image thereof is displayed in an enlarging manner, and hence the volume thereof can be visualized.

Furthermore, the data of the item ordered by the customer by himself or by herself by using the electronic menu terminal 1 is directly transmitted to the order management server 3. Further, the data is used as a cooking instruction to the kitchen terminal 6, and is used for the account processing at the POS terminal 7. Accordingly, it is possible to realize a self-ordering order management system.

It should be noted that the present invention is not limited to the above-mentioned embodiment as it is. In the implementation stage, the constituent element of the invention can be modified and embodied within the scope not deviating from the gist of the invention.

For example, in the above embodiment, the image of the selected item is made the high three-dimensional image with a high degree of exaggeration in height, and the image of the ordered item is made the low three-dimensional image with a low degree of exaggeration in height. However, the assignment of the above high degree and low degree may be reversed. That is, the image of the selected item may be made the low three-dimensional image, and the image of the ordered item may be made the high three-dimensional image.

Further, in the above embodiment, the touch panel 18 is shown as an input device of the electronic menu terminal 1. However, the input device is not limited to the touch panel. For example, a pointing device such as a mouse, keyboard or the like can be used.

Further, in the above embodiment, an electronic menu terminal 1 is provided to each of the seats 23a to 23d of the restaurant table 21. However, one electronic menu terminal 1 may be provided to only each restaurant table 21.

Further, in the above embodiment, the electronic menu terminal 1 configured to display the items of the menu has been described. However, the items to be displayed are not particularly limited. In short, it is sufficient if the selected state and non-selected state can be distinguished from each other by means of the two-dimensional image and three-dimensional image.

Furthermore, in the above embodiment, the description has been given on the assumption that the display control program 30 which is the function of carrying out the invention is recorded in advance on the ROM 12 of the electronic menu terminal 1. However, the embodiment is not limited to the above configuration. The identical function may be downloaded from the network to the electronic menu terminal 1. Further, a recording medium in which the identical function is stored may be installed in the electronic menu terminal 1. As the recording medium, a recording medium of any form may be used as long as it is a recording medium such a CD-ROM capable of storing a program, and is a recording medium that can be read by the apparatus. Further, the function to be installed in advance or to be obtained by downloading may be the one that realizes the function in cooperation with the operating system (OS) or the like in the apparatus.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A display apparatus (1) configured to display a plurality of items **characterized by** comprising:
a display panel (17) provided with a function of displaying a three-dimensional image to be stereoscopically viewable;
an item overview creation section (91) configured to create information on an item overview screen on which two-dimensional images of the respective items are arranged;
an overview display control section (92) configured to display the item overview screen on the display panel; and
a specific item display control section (93) configured to switch an image of a specific item selected from among the items two-dimensional images of which are displayed on the item overview screen from the two-dimensional image to a three-dimensional image.

2. The display apparatus according to claim 1 **characterized by** further comprising:
a selection receiving section (94) configured to receive selection of any one item from among the items the two-dimensional images of which are displayed on the item overview screen, wherein
the specific item display control section (93) switches an image of the item the selection of which has been received by the selection receiving section (94) from the two-dimensional image to a three-dimensional image.

3. The display apparatus according to claim 2 **characterized by** further comprising:
an item information storage section (2B) configured to store item information constituted, at least, of a name of an item, price thereof, and comment used to explain contents of the item;
a detail receiving section (95) configured to receive a demand for detail of the item the selection of which has been received by the selection receiving section;
an item information reading section (96) configured to read the item information of the item from the item information storage section, the demand for detail of the item having been received by the detail receiving section (95);
a detail screen creation section (97) configured to create an item detail screen from a three-dimensional image of the item, the demand for detail of the item having been received by the detail receiving section (95), and the item information read from the item information storage section (2B); and
a detail screen display control section (98) configured to display the item detail screen on the display panel.

4. The display apparatus according to claim 1 **characterized by** further comprising:
an order receiving section (99) configured to receive an order of an item; and
an order information storage section (31) configured to store information on the item an order of which has been received by the order receiving section, wherein
the specific item display control section (93) switches an image of the item from the two-dimensional image to a three-dimensional image, information on the item being stored in the order information storage section (31).

5. The display apparatus according to claim 4 **characterized by** further comprising:
a communication section (14) configured to transmit information on the item stored in the order information storage section (31) to an external apparatus.

6. The display apparatus according to claim 2 further comprising:
an order receiving section (99) configured to receive an order of an item; and
an order information storage section (31) configured to store information on the item an order of which has been received by the order receiving section (99), wherein
the specific item display control section switches an image of the item from the two-dimensional image to a three-dimensional image, information on the item being stored in the order information storage section.

7. The display apparatus according to claim 6, **characterized in that**
a three-dimensional image of the item the selection of which has been received by the selection receiving section (94), and a three-dimensional image of the item, information on the item being stored in the order information storage section (31), differ from each other in the degree of exaggeration in height.

8. The display apparatus according to claim 7, **characterized in that**
the degree of exaggeration in height of the three-dimensional image of the item the selection of which has been received by the selection receiving section (94) is higher than the three-dimensional image of the item, information on the item being stored in the order information storage section (31).

9. The display apparatus according to claim 6 **characterized by** further comprising a communication section (14) configured to transmit information on the item stored in the order information storage section (31) to an external apparatus.

10. A display control method of a display apparatus (1) configured to display a plurality of items **characterized by** comprising:
creating an item overview screen on which two-dimensional images of the items are arranged;
displaying the item overview screen on a display panel (17) provided with a function of displaying a three-dimensional image to be stereoscopically viewable; and
switching an image of a specific item selected from among the items two-dimensional images of which are displayed on the item overview screen from the two-dimensional image to a three-dimensional image.

11. The display control method according to claim 10 **characterized by** further comprising:
switching an image of any one item selection of which has been received by a selection receiving section (94) from among the items the two-dimensional images of which are displayed on the item overview screen from the two-dimensional image to a three-dimensional image.

12. The display control method according to claim 10 **characterized by** further comprising:
storing information on the item an order of which has been received by an order receiving section (99) in an order information storage section (31); and
switching an image of the item from the two-dimensional image to a three-dimensional image, information on the item being stored in the order information storage section (31).

13. The display control method according to claim 11 **characterized by** further comprising:
storing information on the item an order of which has been received by an order receiving section (99) in an order information storage section (31); and
switching an image of the item from the two-dimensional image to a three-dimensional image, information on the item being stored in the order information storage section (31).

14. The display control method according to claim 13 **characterized by** further comprising:
making a three-dimensional image of the item the selection of which has been received by the selection receiving section (94), and a three-dimensional image of the item, information on the item being stored in the order information storage section (31) differ from each other in the degree of exaggeration in height.
